(19) Europäisches Patentamt
European Patent Office
Office européen des brevets

(11) **EP 3 470 459 B1**

(12) **EUROPEAN PATENT SPECIFICATION**

(45) Date of publication and mention of the grant of the patent:
**12.04.2023 Bulletin 2023/15**

(21) Application number: **18196540.1**

(22) Date of filing: **25.09.2018**

(51) International Patent Classification (IPC):
***C08L 9/00*** *(2006.01)* ***C08L 9/06*** *(2006.01)*
***C08L 25/16*** *(2006.01)* ***C08L 93/00*** *(2006.01)*
***C08K 5/548*** *(2006.01)* ***B60C 1/00*** *(2006.01)*

(52) Cooperative Patent Classification (CPC):
(C-Sets available)
**C08L 9/00; B60C 1/00; B60C 1/0016; B60C 1/0025; C08L 9/06;** B60C 2001/005; B60C 2001/0058; B60C 2001/0066; C08K 2201/014; C08L 25/16; C08L 93/00 (Cont.)

# (54) RUBBER COMPOSITION FOR TIRE

KAUTSCHUKZUSAMMENSETZUNG FÜR REIFEN

COMPOSITION DE CAOUTCHOUC POUR PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.10.2017 JP 2017198850**

(43) Date of publication of application:
**17.04.2019 Bulletin 2019/16**

(73) Proprietor: **Sumitomo Rubber Industries, Ltd.**
**Kobe-shi, Hyogo 651-0072 (JP)**

(72) Inventor: **WATANABE, Kenya**
**Kobe-shi,Hyogo 651-0072 (JP)**

(74) Representative: **TBK**
**Bavariaring 4-6**
**80336 München (DE)**

(56) References cited:
**EP-A1- 2 695 911**
**EP-A1- 2 960 289**
**EP-A1- 3 178 877**
**EP-A1- 3 228 658**
**EP-A1- 3 281 979**
**EP-B1- 3 178 877**
**US-A1- 2016 200 902**
**US-A1- 2017 107 360**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08L 9/00, C08L 9/06, C08L 45/00, C08L 25/16, C08K 5/548;**
**C08L 9/06, C08L 9/00, C08L 45/00, C08L 25/16, C08K 5/548**

## Description

BACKGROUND OF THE INVENTION

Field of the Invention

The present invention relates to a rubber composition, for a tire, in which α-methylstyrene-based resin and hydrogenated-terpene-based resin are contained in diene rubber component.

Description of the Background Art

An important performance of a tire is wet grip performance and wear resistance for improving safety during running. Furthermore, in recent years, there is a need to improve fuel economy performance by improving rolling resistance of the tire in order to save resources.

A hysteresis loss needs to be low in order to improve fuel economy, and wet skid resistance needs to be high in order to improve wet grip performance. However, low hysteresis loss and high wet skid resistance conflict with each other, and fuel economy and wet grip performance are difficult to improve in a well-balanced manner.

A method in which carbon is added to rubber for improving wear resistance is known. However, balance between fuel economy and wet grip performance tends to be reduced. Furthermore, butadiene rubber, which is advantageous in wear resistance, has low hysteresis loss and fuel economy becomes good, while butadiene rubber is disadvantageous in wet grip performance.

Therefore, a method for obtaining a rubber composition that allows wet grip performance, wear resistance, and fuel economy to comprehensively become good, is required.

Furthermore, as a method for improving fuel economy and wet grip performance in a well-balanced manner, a method, in which silica as filler and two kinds of silane coupling agents are used, is known (Japanese Laid-Open Patent Publication No. 2012-82325). Further rubber compositions are disclosed in EP 3228658 A1, EP 2960289 A1 and EP 2695911 A1.

However, although the technique disclosed in Japanese Laid-Open Patent Publication No. 2012-82325 can improve fuel economy and wet grip performance in a well-balanced manner to some degree, wear resistance is not particularly considered. Furthermore, silica has high self-aggregability and is difficult to disperse. Therefore, there is a room for further improving fuel economy, wet grip performance, and wear resistance in a well-balanced manner.

An object of the present invention is to provide a rubber composition, for a tire, which allows excellent wet grip performance to be exhibited while maintaining excellent fuel economy and excellent wear resistance.

SUMMARY OF THE INVENTION

The inventor of the present invention has found as a result of thorough study that a rubber composition for a tire is formed such that a rubber component containing diene rubber contains a predetermined amount of α-methylstyrene-based resin having a predetermined softening point and a predetermined amount of hydrogenated-terpene-based resin having predetermined softening point and hydrogenation rate, whereby the aforementioned problem can be solved, and has completed the present invention.

That is, the present invention is directed to a rubber composition, for a tire, which includes 3 to 25 parts by mass of an α-methylstyrene-based resin, preferably includes 5 to 23 parts by mass of the α-methylstyrene-based resin, and more preferably includes 7 to 22 parts by mass of the α-methylstyrene-based resin, per 100 parts by mass of a rubber component containing diene rubber, the α-methylstyrene-based resin having a softening point of 60°C to 110°C, preferably 70°C to 105°C, and more preferably 75°C to 100°C, and which includes 1 to 15 parts by mass of a hydrogenated-terpene-based resin, preferably includes 2 to 13 parts by mass of the hydrogenated-terpene-based resin, and more preferably includes 3 to 11 parts by mass of the hydrogenated-terpene-based resin, per 100 parts by mass of the rubber component containing the diene rubber, the hydrogenated-terpene-based resin having a softening point of 120°C to 150°C, preferably 120°C to 145°C, and more preferably 125°C to 140°C, the hydrogenated-terpene-based resin having a hydrogenation rate of 10% to 100%, preferably 20% to 100%, and more preferably 30% to 100%, and which includes silica and 3-octanoylthio-1-propyltriethoxysilane as silane coupling agent.

The rubber composition preferably includes two kinds of silane coupling agents having different sulfur contents. In this case, it is favorable that a sulfur content of the silane coupling agent having a higher sulfur content is 0.35% to 0.8% by mass, preferably 0.4% to 0.8% by mass, and more preferably 0.4% to 0.7% by mass, and a sulfur content of the silane coupling agent having a lower sulfur content is 0.05% to 0.35% by mass, preferably 0.1% to 0.35% by mass, and more preferably 0.1% to 0.3% by mass such that both the sulfur contents are prevented from being 0.35% by mass.

The rubber composition preferably includes 40% to 95% by mass of styrene-butadiene rubber, preferably

includes 45% to 90% by mass of the styrene-butadiene rubber, and more preferably includes 50% to 85% by mass of the styrene-butadiene rubber, in the rubber component, and which includes 5% to 60% by mass of butadiene rubber, preferably includes 10% to 55% by mass of the butadiene rubber, and more preferably includes 15% to 50% by mass of the butadiene rubber, in the rubber component.

The rubber composition for a tire according to the present invention includes 3 to 25 parts by mass of an α-methylstyrene-based resin per 100 parts by mass of a rubber component containing diene rubber, the α-methylstyrene-based resin having a softening point of 60°C to 110°C, and includes 1 to 15 parts by mass of a hydrogenated-terpene-based resin per 100 parts by mass of the rubber component containing the diene rubber, the hydrogenated-terpene-based resin having a softening point of 120 to 150°C and a hydrogenation rate of 10 to 100%. Therefore, the rubber composition for a tire allows excellent wet grip performance to be exhibited while maintaining excellent fuel economy and excellent wear resistance.

DESCRIPTION OF THE PREFERRED EMBODIMENTS

A rubber composition for a tire according to the present invention includes a predetermined amount of α-methylstyrene-based resin and a predetermined amount of hydrogenated-terpene-based resin per 100 parts by mass of a rubber component containing diene rubber, and the α-methylstyrene-based resin has a predetermined softening point, and the hydrogenated-terpene-based resin has predetermined softening point and hydrogenation rate.

In the rubber composition for a tire according to the present invention, two kinds of resins each having a high compatibility with diene rubber are used, and, therefore, it is considered that each resin is finely dispersed, and high hysteresis loss performance is exhibited under stimulation response in a high frequency band such as wet grip region, and hysteresis loss can be reduced under stimulation response in a low frequency band in which, for example, the tire rolls. Furthermore, deterioration of wear resistance can be inhibited by the resins being finely dispersed in rubber. Moreover, a softening point and compatibility with rubber are different between the two kinds of resins. It is considered that, when a plurality of kinds of resins are simultaneously blended, the above-described resin dispersibility is controlled, and adverse effect on fuel economy and wear resistance is reduced, and high wet grip performance can be exhibited.

α-methylstyrene-based resin

An α-methylstyrene-based resin is not particularly limited, and any α-methylstyrene-based resin having a softening point of 60 to 110°C can be used. The α-methylstyrene-based resin contains α-methylstyrene as a main monomer component that forms a skeleton (main chain) of the resin. As such an α-methylstyrene-based resin, the α-methylstyrene-based resin that is manufactured and sold by, for example, Arizona Chemical Company can be used. One kind of the α-methylstyrene-based resins may be used alone, or two or more kinds thereof may be used in combination.

As described above, the softening point of the α-methylstyrene-based resin is not lower than 60°C, preferably not lower than 70°C, and more preferably not lower than 75°C. When the softening point of the α-methylstyrene-based resin is lower than 60°C, rolling resistance tends to be deteriorated. The softening point of the α-methylstyrene-based resin is not higher than 110°C, preferably not higher than 105°C, and more preferably not higher than 100°C. When the softening point of the α-methylstyrene-based resin is higher than 110°C, dispersibility of the resin is reduced, and wear resistance tends to be deteriorated.

In the description herein, the softening point of the resin such as the α-methylstyrene-based resin and the hydrogenated-terpene-based resin is a temperature at which the ball drops when the softening point specified in JIS K 6220-1 :2001 is measured by a ring and ball softening point measuring device.

A content of the α-methylstyrene-based resin per 100 parts by mass of the rubber component is not less than 3 parts by mass, preferably not less than 5 parts by mass, and more preferably not less than 7 parts by mass. When the content of the α-methylstyrene-based resin is less than 3 parts by mass, the effect of improving wet grip performance is less likely to be obtained. The content of the α-methylstyrene-based resin is not greater than 25 parts by mass, preferably not greater than 23 parts by mass, and more preferably not greater than 22 parts by mass. When the content of the α-methylstyrene-based resin is greater than 25 parts by mass, wear resistance tends to be deteriorated.

Hydrogenated-terpene-based resin

The hydrogenated-terpene-based resin is not particularly limited, and any hydrogenated-terpene-based resin which has a softening point of 120 to 150°C and has a hydrogenation rate of 10 to 100% can be used. The hydrogenated-terpene-based resin can be produced by hydrogenating, in a known manner, a terpene-based resin such as: a terpene resin; a terpene aromatic resin obtained by copolymerization of a terpene compound and an aromatic compound; and an aromatic modified terpene resin obtained by modifying a terpene resin with an aromatic compound. Furthermore, various hydrogenated-terpene-based resins manufactured and sold by, for example, YASUHARA CHEMICAL CO., LTD.

can be used. Among them, a hydrogenated aromatic modified terpene resin is preferable from the viewpoint of both wear resistance and wet grip performance being achieved. Each of the hydrogenated-terpene-based resins may be used alone, or two or more of them may be used in combination.

The aromatic compound is not particularly limited and may be any compound having an aromatic ring. Examples of the aromatic compound include: phenolic compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; styrene derivatives such as styrene, alkylstyrenes, alkoxystyrenes, and unsaturated hydrocarbon group-containing styrenes: coumarone; and indene. Among them, phenol is preferable for the terpene aromatic resin, and a styrene derivative is preferable for the aromatic modified terpene resin. That is, the terpene aromatic resin is preferably terpene phenolic resin, and the aromatic modified terpene resin is preferably terpene resin modified with a styrene derivative.

The number of carbon atoms of each of the alkyl group and the alkoxy group in the compound is preferably 1 to 20 and more preferably 1 to 12. The number of carbon atoms of the unsaturated hydrocarbon group in the compound is preferably 2 to 20, more preferably 2 to 12, and even more preferably 2 to 5.

The aromatic compound may have one substituent, or two or more substituents on the aromatic ring. When the number of the substituents on the aromatic ring is not less than 2, the substituents may be located at any of the o-position, the m-position, and the p-position. Furthermore, in the styrene derivative having a substituent on the aromatic ring, the substituent may be located at any of the o-position, the m-position, or the p-position with respect to the vinyl group of styrene. Each of the aromatic compounds may be used alone, or two or more of them may be used in combination.

Specific examples of the alkylphenols include methylphenol, ethylphenol, butylphenol, t-butylphenol, octylphenol, nonylphenol, decylphenol, and dinonylphenol. They may have the respective substituents at any of the o-position, the m-position, and the p-position. Among them, t-butylphenol is preferable and p-t-butylphenol is more preferable.

Specific examples of the alkylnaphthols include compounds obtained by replacing the phenol moiety of the alkylphenols with naphthol.

Specific examples of the alkylstyrenes include compounds obtained by replacing the phenol moiety of the alkylphenols with styrene.

Specific examples of the alkoxyphenols include compounds obtained by replacing the alkyl groups of the alkylphenols with the corresponding alkoxy groups. Similarly, specific examples of the alkoxynaphthols include compounds obtained by replacing the alkyl groups of the alkylnaphthols with the corresponding alkoxy groups. Specific examples of the alkoxystyrenes include compounds obtained by replacing the alkyl groups of the alkylstyrenes with the corresponding alkoxy groups.

Examples of the unsaturated hydrocarbon group-containing phenols include a compound which contain at least one hydroxyphenyl group per molecule, and in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C10 alkenyl groups.

Specific examples of the unsaturated hydrocarbon group-containing phenols include isopropenylphenol and butenylphenol. Specific examples of the unsaturated hydrocarbon group-containing naphthols and the unsaturated hydrocarbon group-containing styrenes can be similarly described.

Specific examples of the terpene compound include α-pinene, β-pinene, 3-carene (δ-3-carene), dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol.

Among these, α-pinene, β-pinene, 3-carene (δ-3-carene), dipentene, and limonene are preferable, and α-pinene and limonene are more preferable from the viewpoint that they allow wet grip performance and durability to be improved in a well-balanced manner. The limonene may be any of d-, l-, and d/l-limonenes. Each of these terpene compounds may be used alone, or two or more of them may be used in combination.

The proportion between the aromatic compound and the terpene compound in the terpene aromatic resin or the aromatic modified terpene resin may be set as appropriate so as to obtain desired physical properties.

Examples of the terpene aromatic resin include a compound obtained by copolymerization of a styrene derivative and limonene.

As described above, the softening point of the hydrogenated-terpene-based resin is not lower than 120°C and preferably not lower than 125°C. When the softening point of the hydrogenated-terpene-based resin is lower than 120°C, wet grip performance is less likely to be sufficiently obtained as desired. Furthermore, the softening point of the hydrogenated-terpene-based resin is not higher than 150°C, preferably not higher than 145°C, and more preferably not higher than 140°C. When the softening point of the hydrogenated-terpene-based resin is higher than 150°C, resin is left melted in the rubber kneading process step, and dispersion becomes poor, and wear resistance may be deteriorated.

As described above, the hydrogenation rate of the hydrogenated-terpene-based resin is not less than 10%, preferably not less than 20%, and more preferably not less than 30%. When the hydrogenation rate of the hydrogenated-terpene-based resin is less than 10%, imbalance between wear resistance and rolling resistance performance (RR performance) tends to occur. The hydrogenation rate (degree of hydrogenation) of the hydrogenated-terpene-based resin is a value calculated from the integral values of the double bond peaks determined by 1H-NMR (proton NMR) according to the equation described below. In the description herein, the hydrogenation rate refers to the hydrogenation rate of double bonds.

$$(\text{Hydrogenation rate } [\%]) = \{(A-B)/A\} \times 100$$

A: integral value of double bond peaks before hydrogenation
B: integral value of double bond peaks after hydrogenation

A content of the hydrogenated-terpene-based resin per 100 parts by mass of the rubber component is not less than 1 part by mass, preferably not less than 2 parts by mass, and more preferably not less than 3 parts by mass. When the content of the hydrogenated-terpene-based resin is less than 1 part by mass, the effect of improving wet grip performance tends to be insufficient. The content of the hydrogenated-terpene-based resin is not greater than 15 parts by mass, preferably not greater than 13 parts by mass, and more preferably not greater than 11 parts by mass. When the content of the hydrogenated-terpene-based resin is greater than 15 parts by mass, fuel economy and wear resistance tend to be deteriorated.

Rubber component

The rubber component used in the rubber composition for a tire according to the present invention contains diene rubber. The diene rubber is not particularly limited. Examples of the diene rubber include known rubber, using conjugated diene monomer, such as natural rubber (NR), epoxidized natural rubber (ENR), isoprene rubber (IR), butadiene rubber (BR), styrene-butadiene rubber (SBR), and styrene-isoprene-butadiene rubber (SIBR). Each of the diene rubbers may be used alone, or two or more of them may be used in combination. Among them, SBR and BR are preferable, and use of SBR and BR in combination is more preferable because wet grip performance and wear resistance can be obtained in a well-balanced manner.

Styrene-butadiene rubber (SBR)

SBR is not particularly limited. Examples of the SBR include emulsion-polymerized SBR (E-SBR) and solution-polymerized SBR (S-SBR). The SBR may be oil-extended or may not be oil-extended. Among them, oil-extended SBR having a high molecular weight is preferable in view of wet grip performance. Each of the SBRs may be used alone, or two or more of them may be used in combination.

Furthermore, the SBR may be a SBR in which the main chain and/or end may be modified with modifier. For example, the SBR may be a SBR which is obtained by modification with multifunctional type modifier such as tin tetrachloride and silicon tetrachloride, and which has a branched structure in a part thereof. Among them, the SBR is particularly preferably a SBR in which the main chain and/or end is modified with a modifier having a functional group that interacts with silica. When a modified styrene-butadiene rubber which is obtained by modification with such a modifier and has a functional group that interacts with silica is used, fuel economy and wet grip performance can be further improved in a well-balanced manner.

Examples of the functional group that interacts with silica include an amino group, an amide group, an alkoxysilyl group, an isocyanate group, an imino group, an imidazole group, a urea group, an ether group, a carbonyl group, an oxycarbonyl group, a sulfide group, a disulfide group, a sulfonyl group, a sulfinyl group, a thiocarbonyl group, an ammonium group, an imido group, a hydrazo group, an azo group, a diazo group, a carboxyl group, a nitrile group, a pyridyl group, an alkoxy group, a hydrocarbon group, a hydroxyl group, an oxy group, and an epoxy group. The functional group may have a substituent. Among them, a primary, secondary, or tertiary amino group (in particular, glycidylamino group), an epoxy group, a hydroxyl group, an alkoxy group (preferably, C1 to C6 alkoxy group), an alkoxysilyl group (preferably, C1 to C6 alkoxysilyl group), and a hydrocarbon group are preferable because the effect of improving fuel economy and wet grip performance is high.

Furthermore, as the modified SBR having the functional group that interacts with silica, styrene-butadiene rubber modified with a compound (modifier) represented by the following formula (1) is preferable.

[Chemical Formula 1]

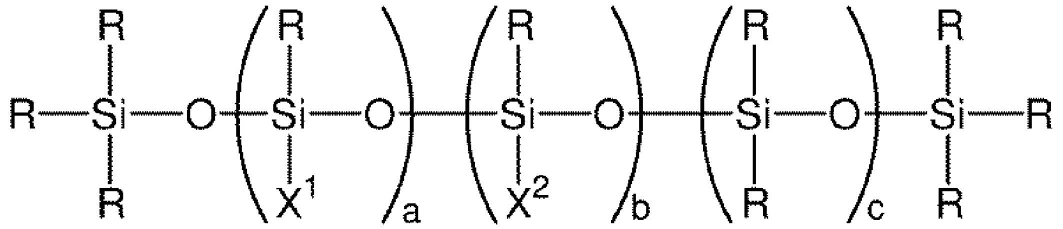

(1)

(wherein R each independently represents a C1 to C6 alkyl group or a C6 to C12 aryl group. $X^1$ represents a group represented by the following chemical formula:

[Chemical Formula 2]

$$-R^{11}-O-R^{12}-R^{13}$$

(wherein $R^{11}$ and $R^{12}$ are the same or different from each other, and each represent a bivalent hydrocarbon group. $R^{13}$ represents a cyclic ether group.) $X^2$ represents a group represented by the following chemical formula:

[Chemical Formula 3]

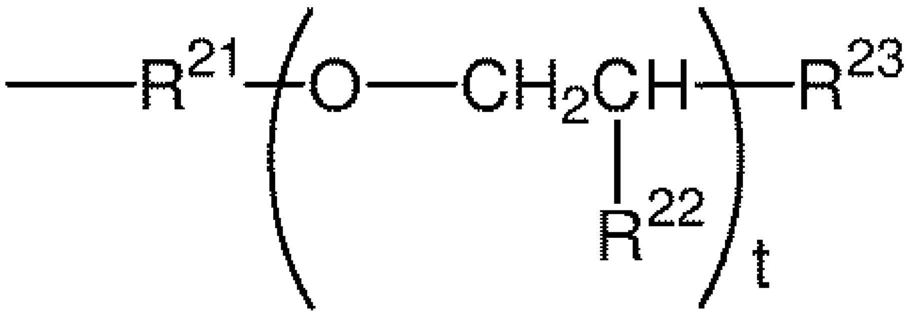

(wherein $R^{21}$ represents a C2 to C10 alkylene group or alkylarylene group. $R^{22}$ represents a hydrogen atom or a methyl group. $R^{23}$ represents C1 to C10 alkoxy group or aryloxy group. t represents an integer of 2 to 20.). a, b, and c each represent the number of repetitions of the unit, and a represents an integer of 3 to 200, b represents an integer of 0 to 200, and c represents an integer of 0 to 200.)

In polyorganosiloxane represented by Chemical Formula (1), examples of the C1 to C6 alkyl group represented by R include a methyl group, an ethyl group, an n-propyl group, an isopropyl group, a butyl group, a pentyl group, a hexyl group, and a cyclohexyl group. Examples of the C6 to C12 aryl group include a phenyl group and a methylphenyl group. Among them, a methyl group and an ethyl group are preferable from the viewpoint of polyorganosiloxane itself being easily produced, a is preferably an integer of 3 to 150 and more preferably an integer of 3 to 120. b is preferably an integer of 0 to 150 and more preferably an integer of 0 to 120. c is preferably an integer of 0 to 150 and more preferably an integer of 0 to 120.

In the polyorganosiloxane represented by Chemical Formula (1), $R^{11}$ and $R^{12}$ in $X^1$ are the same or different from each other and each represent a bivalent hydrocarbon group. Examples of the bivalent hydrocarbon group include a branched or unbranched C1 to C30 alkylene group, a branched or unbranched C2 to C30 alkenylene group, a branched or unbranched C2 to C30 alkynylene group, and a C6 to C30 arylene group. Among them, a branched or unbranched C1 to C30 alkylene group is preferable. A branched or unbranched C1 to C15 alkylene group is more preferable, a branched or unbranched C1 to C5 alkylene group is even more preferable, and an unbranched C1 to C3 alkylene group is particularly preferable. Preferable examples of $R^{11}$ and $R^{12}$ described above include the alkylene group having the

above-described number of carbon atoms. Specific examples of the alkylene group include a methylene group, an ethylene group, a propylene group, an isopropylene group, a butylene group, an isobutylene group, a pentylene group, a hexylene group, a heptylene group, an octylene group, a nonylene group, a decylene group, undecylene group, a dodecylene group, a tridecylene group, a tetradecylene group, a pentadecylene group, a hexadecylene group, a heptadecylene group, and an octadecylene group. Among them, a methylene group, an ethylene group, and a propylene group are particularly preferable from the viewpoint of excellent fuel economy and fracture properties being obtained.

In Chemical Formula (1), $R^{13}$ in $X^1$ represents a cyclic ether group. Examples of the cyclic ether group include: a cyclic ether group having one ether bond such as an oxirane group, an oxetane group, an oxolane group, an oxane group, an oxepane group, an oxocane group, an oxonane group, an oxecane group, an oxete group, and an oxol group; a cyclic ether group having two ether bonds such as a dioxolane group, a dioxane group, a dioxepane group, and a dioxecane group; and a cyclic ether group having three ether bonds such as a trioxane group. Among them, a C2 to C7 cyclic ether group having one ether bond is preferable, a C2 to C5 cyclic ether group having one ether bond is more preferable, and an oxirane group is even more preferable. Furthermore, the cyclic ether group preferably has no unsaturated bond in the cyclic skeleton. Furthermore, a hydrogen atom of the cyclic ether group described above may be substituted with the monovalent hydrocarbon group described above.

In Chemical Formula (1), $R^{21}$ in $X^2$ represents a C2 to C10 alkylene group or alkylarylene group. Among them, a branched or unbranched C2 to C8 alkylene group is preferable, a branched or unbranched C2 to C6 alkylene group is more preferable, a branched or unbranched C2 to C4 alkylene group is even more preferable, and a branched or unbranched C3 alkylene group is particularly preferable. Preferable examples of $R^{21}$ described above include an alkylene group having the above-described number of carbon atoms. Specific examples of the alkylene group include an ethylene group, a propylene group, an isopropylene group, a butylene group, an isobutylene group, a pentylene group, a hexylene group, a heptylene group, an octylene group, a nonylene group, and a decylene group. Among them, an ethylene group, a propylene group, an isopropylene group, a butylene group, and an isobutylene group are particularly preferable, and a propylene group and an isopropylene group are most preferable.

In Chemical Formula (1), $R^{22}$ in $X^2$ represents a hydrogen atom or a methyl group, and is particularly preferably a hydrogen atom.

In Chemical Formula (1), $R^{23}$ in $X^2$ represents a C1 to C10 alkoxy group or aryloxy group. Among them, a branched or unbranched C1 to C8 alkoxy group is preferable, a branched or unbranched C1 to C6 alkoxy group is more preferable, and a branched or unbranched C1 to C4 alkoxy group is even more preferable. Preferable examples of $R^{23}$ described above include an alkoxy group having the above-described number of carbon atoms. Specific examples of the alkoxy group include a methoxy group, an ethoxy group, a propoxy group, an isopropoxy group, a butoxy group, an isobutoxy group, a pentyloxy group, a hexyloxy group, a heptyloxy group, and an octyloxy group. Among them, a methoxy group, an ethoxy group, a propoxy group, and a butoxy group are particularly preferable, and a methoxy group is most preferable.

In Chemical Formula (1), t in $X^2$ is an integer of 2 to 20, and is particularly preferably an integer of 2 to 8.

As the compound represented by Chemical Formula (1), a compound represented by the following Chemical Formula (2) is preferably used from the viewpoint of the above-described performances being advantageously improved.

[Chemical Formula 4]

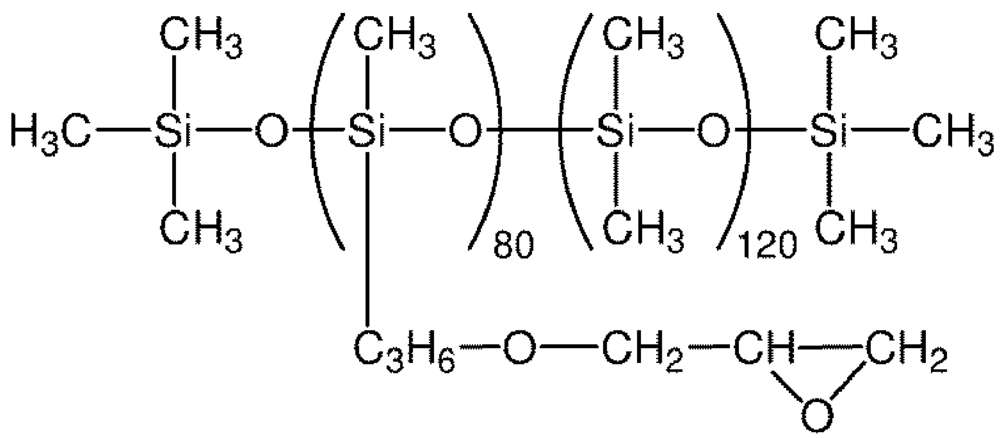

(2)

As a method for modifying styrene-butadiene rubber with the compound (modifier) represented by Chemical Formula (1), a conventionally known method can be used. For example, styrene-butadiene rubber can be modified by bringing styrene-butadiene rubber into contact with the compound. Specifically, for example, a method in which, after

styrene-butadiene rubber is prepared by solution polymerization, a predetermined amount of the compound is added to the rubber solution, and a polymerization terminal (active terminal) of the styrene-butadiene rubber is caused to react with the compound, can be used.

A content of styrene in the SBR is preferably not less than 15% by mass, more preferably not less than 20% by mass, and even more preferably not less than 25% by mass. When the content of styrene in the SBR is not less than 15% by mass, good wet grip performance tends to be obtained. The content of styrene in the SBR is preferably not greater than 55% by mass, more preferably not greater than 50% by mass, and even more preferably not greater than 45% by mass. When the content of styrene in the SBR is not greater than 55% by mass, better wear resistance tends to be obtained. In the description herein, the content of styrene in the SBR is calculated by $H^1$-NMR measurement.

An amount of vinyl bonds in the SBR is preferably not less than 10% by mol, more preferably not less than 15% by mol, and even more preferably not less than 20% by mol. When an amount of vinyl bonds in the SBR is not less than 10% by mol, good rolling resistance performance (RR performance) and wet grip performance tend to be obtained in a well-balanced manner. An amount of vinyl bonds in the SBR is preferably not greater than 45% by mol, more preferably not greater than 40% by mol, and even more preferably not greater than 30% by mol. When an amount of vinyl bonds in the SBR is greater than 45% by mol, wear resistance tends to be deteriorated. In the description herein, an amount of vinyl bonds in each of the SBR and the BR is calculated by infrared spectroscopy.

A weight average molecular weight (Mw) of the SBR is preferably not less than 200000, more preferably not less than 400000, and even more preferably not less than 500000. When the weight average molecular weight (Mw) of the SBR is not less than 200000, wear resistance tends to be good. The weight average molecular weight (Mw) of the SBR is preferably not greater than 1500000, more preferably not greater than 1300000, and even more preferably not greater than 1200000. When the weight average molecular weight (Mw) of the SBR is not greater than 1500000, processability tends to be good.

When the rubber composition for a tire according to the present invention contains the SBR, a content of the SBR per 100% by mass of the rubber component is preferably not less than 40% by mass, more preferably not less than 45% by mass, and even more preferably not less than 50% by mass. When the content of the SBR is not less than 40% by mass, wet grip performance tends to be good. The content of the SBR per 100% by mass of the rubber component is preferably not greater than 95% by mass, more preferably not greater than 90% by mass, and even more preferably not greater than 85% by mass. When the content of the SBR is not greater than 95% by mass, wear resistance and rolling resistance performance tend to be good. When two or more kinds of the SBRs are used in combination, the total of the contents of all the SBRs is regarded as a content of the SBR in the rubber component according to the present invention.

Butadiene rubber (BR)

BR is not particularly limited. Examples of the BR include a BR, which is generally used in the tire industry, such as a BR (low-cis BR) having a cis-1,4 bond content of less than 50%, a BR (high-cis BR) having a cis-1,4 bond content of not less than 90%, a rare earth butadiene rubber (rare earth BR) that is synthesized by using a rare earth element catalyst, a BR (SPB-containing BR) that contains syndiotactic polybutadiene crystals, and a modified BR (high-cis modified BR, low-cis modified BR). Among them, a high-cis BR is more preferably used from the viewpoint of wear resistance.

Examples of the high-cis BR include a high-cis BR manufactured and sold by JSR Corporation, Zeon Corporation, Ube Industries, Ltd., and the like. As the high-cis BR, a high-cis BR having a cis-1,4-bond content of not less than 95% is more preferable. Each of them may be used alone, or two or more of them may be used in combination. When the high-cis BR is contained, low-temperature characteristics and wear resistance can be improved. Each of them may be used alone, or two or more of them may be used in combination. The cis-1,4-bond content in the BR is a value calculated by infrared absorption spectrometry.

When the rubber composition for a tire according to the present invention contains the BR, a content of the BR per 100% by mass of the rubber component is preferably not less than 5% by mass, more preferably not less than 10% by mass, and even more preferably not less than 15% by mass. When the content of the BR is not less than 5% by mass, balance between wear resistance and rolling resistance performance (RR performance) tends to be good. The content of the BR per 100% by mass of the rubber component is preferably not greater than 60% by mass, more preferably not greater than 55% by mass, and even more preferably not greater than 50% by mass. When the content of the BR is not greater than 60% by mass, wet grip performance tends to be good.

A total of the contents of the SBR and the BR per 100% by mass of the rubber component is preferably not less than 80% by mass, more preferably not less than 90% by mass, and even more preferably 100% by mass. When the total of the contents of the SBR and the BR is not less than 80% by mass, balance among wet grip performance, wear resistance performance, and rolling resistance performance (RR performance) can be preferably maintained.

Other blending ingredients

The rubber composition for a tire according to the present invention may contain a rubber component other than the diene rubber, and blending ingredients, such as a reinforcing filler, a silane coupling agent, various softeners, various anti-aging agents, wax, zinc oxide, stearic acid, a vulcanizing agent, and a vulcanization accelerator, which are conventionally used in the rubber industry in general, as appropriate, in addition to the above-described components.

Rubber component other than diene rubber

The rubber component of the rubber composition for a tire according to the present invention may contain a rubber component other than the diene rubber component. Examples of the rubber other than the diene rubber include natural rubber, isoprene rubber, and nitrile rubber.

Reinforcing filler

As the reinforcing filler, a reinforcing filler, such as carbon black, silica, calcium carbonate, alumina, clay, and talc, which is conventionally used in a rubber composition for a tire, can be blended. The rubber composition according to the present invention comprises silica.

Carbon black

Examples of the carbon black include carbon black that is manufactured by an oil furnace method, and two or more kinds of carbon black having different colloidal characteristics may be used in combination. Specific examples of the carbon black include GPF, HAF, ISAF, and SAF. Among them, ISAF is preferable. Specifically, N110, N121, N134, N220, and the like can be used.
A nitrogen adsorption specific surface area ($N_2SA$) of the carbon black is not less than 80 $m^2/g$, and preferably not less than 100 $m^2/g$ from the viewpoint of reinforcement. The $N_2SA$ of the carbon black is preferably not greater than 200 $m^2/g$ and more preferably not greater than 150 $m^2/g$ from the viewpoint of good fuel economy. In the description herein, the $N_2SA$ of the carbon black is a value measured in compliance with the method A of JIS K 6217.
A content of the carbon black per 100 parts by mass of the rubber component is preferably not less than 3 parts by mass, more preferably not less than 4 parts by mass, and even more preferably not less than 5 parts by mass. The content of the carbon black per 100 parts by mass of the rubber component is preferably not greater than 60 parts by mass, more preferably not greater than 50 parts by mass, and even more preferably not greater than 40 parts by mass. When the content of the carbon black is in the above-described range, performance balance between fuel economy and wear resistance tends to be significantly improved.

Silica

According to the present invention, silica is contained. The silica is not particularly limited. For example, silica, such as silica (anhydrous silica) prepared by dry process and silica (hydrous silica) prepared by wet process, which is generally used in the tire industry can be used. Among them, hydrous silica prepared by wet process is preferable because it contains a lot of silanol groups. Each silica may be used alone, or two or more kinds thereof may be used in combination.
A nitrogen adsorption specific surface area ($N_2SA$) of the silica is preferably not less than 100 $m^2/g$ and more preferably not less than 150 $m^2/g$ from the viewpoint of wear resistance. The $N_2SA$ of the silica is preferably not greater than 300 $m^2/g$ and more preferably not greater than 200 $m^2/g$ from the viewpoint of rolling resistance performance (RR performance). In the description herein, the $N_2SA$ of the silica is a value measured by the BET method in compliance with ASTM D3037-81.
A content of the silica per 100 parts by mass of the rubber component is preferably not less than 90 parts by mass, more preferably not less than 95 parts by mass, and even more preferably not less than 100 parts by mass. When the content of the silica is less than 90 parts by mass, the effect of improving wet grip performance tends to be insufficient. The content of the silica per 100 parts by mass of the rubber component is preferably not greater than 160 parts by mass, more preferably not greater than 150 parts by mass, and even more preferably not greater than 140 parts by mass. When the content of the silica is greater than 160 parts by mass, the Mooney viscosity is greatly increased, and moldability tends to be deteriorated.

Silane coupling agent

Silica is contained and a silane coupling agent is further contained. Examples of a silane coupling agent include sulfide silane coupling agents such as bis(3-triethoxysilylpropyl)disulfide and bis(3-triethoxysilylpropyl)tetrasulfide; mercapto silane coupling agents such as 3-mercaptopropyltrimethoxysilane and 3-mercaptopropyltriethoxysilane; thioester silane coupling agents such as 3-octanoylthio-1-propyltriethoxysilane, 3-hexanoylthio-1-propyltriethoxysilane, and 3-octanoylthio-1-propyltrimethoxysilane; vinyl silane coupling agents such as vinyltriethoxysilane; amino silane coupling agents such as 3-aminopropyltriethoxysilane; glycidoxy silane coupling agents such as γ-glycidoxypropyltriethoxysilane; nitro silane coupling agents such as 3-nitropropyltrimethoxysilane; and chloro silane coupling agents such as 3-chloropropyltrimethoxysilane. According to the present invention, 3-octanoylthio-1-propyltriethoxysilane is contained as silane coupling agent. This silane coupling agent may be used alone, or two or more silane coupling agents may be used in combination. The thioester silane coupling agent 3-octanoylthio-1-propyltriethoxysilane is employed because a thioester silane coupling agent has a thioester structure in the molecule, is less likely to react with the diene rubber until the temperature becomes high, inhibits strong binding of the diene rubber, the silane coupling agent, and silica during kneading, and allows silica to be appropriately dispersed.

Furthermore, in the present invention, use of two kinds of the silane coupling agents having different sulfur contents in combination is more preferable. In a case where two kinds of the silane coupling agents having different sulfur contents are used in combination, even when a temperature of reaction between the silica and the silane coupling agent is low, strong binding of the diene rubber, the silane coupling agent, and the silica during kneading is inhibited, silica is preferably dispersed, and deterioration of wear resistance tends to be inhibited. Even when a temperature of reaction between the silica and the silane coupling agent is high, dispersibility of silica is sufficient during kneading, and deterioration of fuel economy and wear resistance tends to be inhibited.

In the description herein, a sulfur content of a silane coupling agent represents a sulfur content per unit mass of the silane coupling agent. When two kinds of the silane coupling agents having different sulfur contents are used in combination, the sulfur content of the silane coupling agent having a higher sulfur content is preferably not less than 0.35% by mass and more preferably not less than 0.4% by mass. The sulfur content of the silane coupling agent having the higher sulfur content is preferably not greater than 0.8% by mass and more preferably not greater than 0.7% by mass. The sulfur content of the silane coupling agent having a lower sulfur content is preferably not less than 0.05% by mass and more preferably not less than 0.1% by mass. The sulfur content of the silane coupling agent having the lower sulfur content is preferably not greater than 0.35% by mass and more preferably not greater than 0.3% by mass. The sulfur content of the silane coupling agent having the higher sulfur content and the sulfur content of the silane coupling agent having the lower sulfur content are different from each other. Therefore, both the sulfur contents are not the same and both of them cannot be 0.35% by mass even when both the sulfur contents are in the preferable ranges. When the sulfur content of each silane coupling agent is in the above-described range, balance between rolling resistance performance (RR performance) and wear resistance tends to be good. The combination of the two kinds of the silane coupling agents is not particularly limited as long as 3-octanoylthio-1-propyltriethoxysilane is contained. Combination of a polysulfide silane coupling agent and a mercapto or thioester silane coupling agent is preferable, and combination of bis(3-triethoxysilylpropyl)tetrasulfide and 3-octanoylthio-1-propyltriethoxysilane is particularly preferable.

The total content of the silane coupling agents per 100 parts by mass of silica is preferably not less than 1 part by mass and more preferably not less than 3 parts by mass. The total content of the silane coupling agents per 100 parts by mass of silica is preferably not greater than 20 parts by mass and more preferably not greater than 10 parts by mass. When the total content of the silane coupling agents is in the above-described range, good processability, rubber strength, and wear resistance tend to be assured, and good rolling resistance performance (RR performance) tends to be obtained.

Softener

Examples of the softener include oil, resin other than the α-methylstyrene-based resin and the hydrogenated-terpene-based resin as described above, and liquid diene-based polymer.

(Oil)

Examples of the oil include process oil such as paraffinic, aromatic, and naphthenic process oils.

When the oil is contained, a content of the oil per 100 parts by mass of the rubber component is preferably not less than 10 parts by mass and more preferably not less than 15 parts by mass. The content of the oil per 100 parts by mass of the rubber component is preferably not greater than 60 parts by mass and more preferably not greater than 55 parts by mass. When the content of the oil is in the above-described range, the effect obtained by containing the oil is sufficient, and good wear resistance can be obtained. In the description herein, the content of the oil includes an amount

of oil contained in the oil-extended rubber.

(Resin other than α-methylstyrene-based resin and hydrogenated-terpene-based resin)

Examples of the resin other than the α-methylstyrene-based resin and the hydrogenated-terpene-based resin include resins, such as aromatic petroleum resin, which are conventionally used in a rubber composition for a tire. Examples of the aromatic petroleum resin include phenolic resin, coumarone-indene resin, terpene-based resin, styrene resin, acrylic resin, rosin resin, and dicyclopentadiene resin (DCPD resin). Examples of the phenolic resin include Koresin (manufactured by BASF) and TACKIROL (manufactured by TAOKA CHEMICAL COMPANY, LIMITED). Examples of the coumarone-indene resin include Coumarone (manufactured by NITTO CHEMICAL CO., LTD), ESCURON (manufactured by NIPPON STEEL & SUMITOMO METAL CORPORATION), and Neopolymer (manufactured by JXTG Nippon Oil & Energy Corporation). Examples of the terpene-based resin include TR7125 (manufactured by Arizona Chemical Company) and TO125 (manufactured by YASUHARA CHEMICAL CO., LTD.).

A softening point of the resin other than the α-methylstyrene-based resin and the hydrogenated-terpene-based resin is preferably not lower than 40°C and more preferably not lower than 60°C. When the softening point is not lower than 40°C, wet grip performance tends to be sufficiently obtained. The softening point is preferably not higher than 120°C and more preferably not higher than 100°C. When the softening point is not higher than 120°C, wet grip performance tends to be sufficiently obtained.

A content of the resin other than the α-methylstyrene-based resin and the hydrogenated-terpene-based resin per 100 parts by mass of the rubber component is preferably not less than 3 parts by mass and more preferably not less than 5 parts by mass. The content of the resin other than the α-methylstyrene-based resin and the hydrogenated-terpene-based resin is preferably not greater than 30 parts by mass and more preferably not greater than 25 parts by mass. When the content of the resin other than the α-methylstyrene-based resin and the hydrogenated-terpene-based resin is in the above-described range, sufficient wet grip performance and wear resistance tend to be obtained, and good fuel economy performance tends to be obtained.

(Liquid diene-based polymer)

Examples of the liquid diene-based polymer include liquid styrene-butadiene copolymer (liquid SBR), liquid butadiene polymer (liquid BR), liquid isoprene polymer (liquid IR), and liquid styrene-isoprene copolymer (liquid SIR). Among them, liquid SBR is preferable because wear resistance and stable steering stability during running are obtained in a well-balanced manner. In the description herein, the liquid diene-based polymer is diene-based polymer in a liquid state at normal temperature (25°C).

A weight average molecular weight (Mw) of the liquid diene-based polymer on the polystyrene equivalent basis, which is measured by gel permeation chromatography (GPC), is preferably not less than $1.0\times10^3$ and more preferably not less than $3.0\times10^3$ from the viewpoint of wear resistance, fracture properties, and durability. The weight average molecular weight (Mw) of the liquid diene-based polymer is preferably not greater than $2.0\times10^5$ and more preferably not greater than $1.5\times10^4$ from the viewpoint of productivity. In the description herein, the Mw of the liquid diene-based polymer is a value, on the polystyrene equivalent basis, which is measured by gel permeation chromatography (GPC).

When the liquid diene-based polymer is contained, a content of the liquid diene-based polymer per 100 parts by mass of the rubber component is preferably not less than 3 parts by mass and more preferably not less than 5 parts by mass. The content of the liquid diene-based polymer is preferably not greater than 30 parts by mass and more preferably not greater than 20 parts by mass. When the content of the liquid diene-based polymer is in the above-described range, good wet grip performance tends to be obtained, and the effect of the present invention tends to be easily obtained.

A content of the softener (the total of the contents of the oil, the resin other than the α-methylstyrene-based resin and the hydrogenated-terpene-based resin, and the liquid diene-based polymer) per 100 parts by mass of the rubber component is preferably not less than 30 parts by mass, more preferably not less than 40 parts by mass, and even more preferably not less than 45 parts by mass. The content of the softener is preferably not greater than 100 parts by mass, more preferably not greater than 90 parts by mass, and even more preferably not greater than 80 parts by mass. When the content of the softener is in the above-described range, the effect of the present invention is more advantageously obtained.

Anti-aging agent

The anti-aging agent is not particularly limited. For example, the anti-aging agent can be selected, as appropriate, from among anti-aging agents such as amine-based compounds, phenol-based compounds, imidazole-based compounds, and metal carbamate salt, and the selected one can be blended. Each of the anti-aging agents may be used

alone, or two or more of them may be used in combination. Among them, since anti-aging effect is high, an amine-based anti-aging agent is preferable, and p-phenylenediamine-based anti-aging agents such as N-(1,3-dimethylbutyl)-N'-phenyl-p-phenylenediamine, N-isopropyl-N'-phenyl-p-phenylenediamine, N,N'-diphenyl-p-phenylenediamine, N,N'-di-2-naphthyl-p-phenylenediamine, N-cyclohexyl-N'-phenyl-p-phenylenediamine, N,N'-bis(1-methylheptyl)-p-phenylenediamine, N,N'-bis(1,4-dimethylpentyl)-p-phenylenediamine, N,N'-bis(1-ethyl-3-methylpentyl)-p-phenylenediamine, N-4-methyl-2-pentyl-N'-phenyl-p-phenylenediamine, N,N'-diaryl-p-phenylenediamine, hindered diaryl-p-phenylenediamine, phenylhexyl-p-phenylenediamine, and phenyloctyl-p-phenylenediamine anti-aging agents, are more preferable. The N-(1,3-dimethylbutyl)-N'-phenyl-p-phenylenediamine anti-aging agent is particularly preferable.

When the anti-aging agent is contained, a content of the anti-aging agent per 100 parts by mass of the rubber component is preferably not less than 0.5 parts by mass and more preferably not less than 1 part by mass. The content of the anti-aging agent per 100 parts by mass of the rubber component is preferably not greater than 5 parts by mass and more preferably not greater than 3 parts by mass. When the content of the anti-aging agent is in the above-described range, the anti-aging effect can be sufficiently obtained, and discoloration due to the anti-aging agent being bloomed on the surface of the tire tends to be inhibited.

As other blending ingredients such as stearic acid, zinc oxide, and wax, those which are conventionally used in the rubber industry can be used.

Vulcanizing agent

The vulcanizing agent is not particularly limited, and vulcanizing agents that are generally used in the rubber industry can be used. However, a vulcanizing agent that contains sulfur atoms is preferable. For example, powdery sulfur, precipitated sulfur, colloidal sulfur, surface-treated sulfur, and insoluble sulfur are used, and powdery sulfur is particularly preferably used.

When the vulcanizing agent is contained, a content of the vulcanizing agent per 100 parts by mass of the rubber component is preferably not less than 0.5 parts by mass, more preferably not less than 0.6 parts by mass, even more preferably not less than 0.8 parts by mass, and particularly preferably not less than 1 part by mass. The content of the vulcanizing agent per 100 parts by mass of the rubber component is preferably not greater than 5 parts by mass, more preferably not greater than 3 parts by mass, even more preferably not greater than 2.5 parts by mass, and particularly preferably not greater than 2 parts by mass. When the content of the vulcanizing agent is in the above-described range, appropriate fracture properties are obtained and wear resistance tends to be good.

Vulcanization accelerator

The vulcanization accelerator is not particularly limited. Examples of the vulcanization accelerator include a sulfenamide-based, a thiazole-based, a thiuram-based, a thiourea-based, a guanidine-based, a dithiocarbamic-acid-based, an aldehyde-amine based or aldehyde-ammonia based, an imidazoline-based, and an xanthate-based vulcanization accelerators. Among them, a sulfenamide-based vulcanization accelerator and a guanidine-based vulcanization accelerator are preferable from the viewpoint of the effect of the present invention being more advantageously obtained.

Examples of the sulfenamide-based vulcanization accelerator include N-cyclohexyl-2-benzothiazole sulfenamide (CBS), N-t- butyl-2-benzothiazole sulfenamide (TBBS), N-oxyethylene-2-benzothiazyl sulfenamide, N,N'-diisopropyl-2- benzothiazyl sulfenamide, and N,N-dicyclohexyl-2-benzothiazyl sulfenamide. Examples of the thiazole-based vulcanization accelerator include 2-mercaptobenzothiazole and dibenzothiazolyl disulfide. Examples of the thiuram-based vulcanization accelerator include tetramethylthiuram monosulfide, tetramethylthiuram disulfide, and tetrabenzylthiuram disulfide (TBzTD). Examples of the guanidine-based vulcanization accelerator include diphenylguanidine (DPG), diorthotolylguanidine, and orthotolylbiguanidine. Each of them may be used alone, or two or more of them may be used in combination. Among them, use of CBS and DPG in combination is preferable from the viewpoint of the effect of the present invention being more advantageously obtained.

When the vulcanization accelerator is contained, a content of the vulcanization accelerator per 100 parts by mass of the rubber component is preferably not less than 0.1 parts by mass, more preferably not less than 0.3 parts by mass, and even more preferably not less than 0.5 parts by mass. The content of the vulcanization accelerator per 100 parts by mass of the rubber component is preferably not greater than 8 parts by mass, more preferably not greater than 7 parts by mass, and even more preferably not greater than 6 parts by mass. When the content of the vulcanization accelerator is in the above-described range, appropriate fracture properties are obtained, and wear resistance tends to be good.

The rubber composition for a tire according to the present invention can be used for tire components such as cap treads, base treads, outer layer sidewalls, inner layer sidewalls, breaker cushions, breaker-covering rubber, and bead apexes. In particular, the rubber composition of the present invention can be preferably used for treads because low heat generation properties, wet grip performance, and wear resistance are excellent. Furthermore, when a tread

has a two-layer structure which includes a cap tread and a base tread, the rubber composition is preferably used for the cap tread.

Method for producing rubber composition for tire

The rubber composition for a tire according to the present invention can be produced in a standard method. For example, the above-described components other than the vulcanizing agent and the vulcanization accelerator are kneaded by a known kneading machine, such as a Banbury mixer, a kneader, or an open roll, which is generally used in the rubber industry (base kneading step), the vulcanizing agent and the vulcanization accelerator are thereafter added and further kneaded (finish kneading step), and the resultant product is vulcanized, thereby producing the rubber composition.

Tire

A tire which uses the rubber composition for a tire according to the present invention can be produced, by using the above-described rubber composition for a tire, in a standard method. That is, the above-described blending ingredients are blended, as appropriate, with a rubber component containing a diene rubber component to obtain the rubber composition, and the rubber composition is extruded into the shape of a tread or the like, adhered to other tire components on a tire former, and is molded in a standard method to obtain an unvulcanized tire. The unvulcanized tire is heated and pressurized in a vulcanizer, thereby producing the tire. The tread can be formed also by a sheet-shaped unvulcanized rubber composition being adhered so as to form a predetermined shape, or by a sheet-shaped unvulcanized rubber composition being inserted into two or more extruders and formed into two phases at a head outlet of the extruder.

[Examples]

Hereinafter, the present invention will be described based on examples. However, the present invention is not limited to the examples only.

Production example 1: Production of modified SBR

Cyclohexane, tetramethylethylenediamine, 1,3-butadiene, and styrene were fed into an autoclave equipped with an agitator in a nitrogen atmosphere, and n-butyllithium was added thereto in an amount necessary for neutralizing polymerization-inhibiting impurities contained in the cyclohexane, 1,3-butadiene, and styrene, and, further, n-butyllithium used for polymerization reaction was added to start the polymerization. Thereafter, tin tetrachloride was added and caused to sufficiently react. Subsequently, polyorganosiloxane A represented by the following Chemical Formula (2) was added as xylene solution thereof, and caused to sufficiently react. Thereafter, methanol was added as polymerization terminator, to obtain modified-SBR-containing solution. Irganox 1520L (manufactured by Ciba Specialty Chemicals) was added to the solution as an anti-aging agent, the solvent was thereafter removed by steam stripping, and vacuum dry was performed, to obtain modified SBR in a solid state.

[Chemical Formula 5]

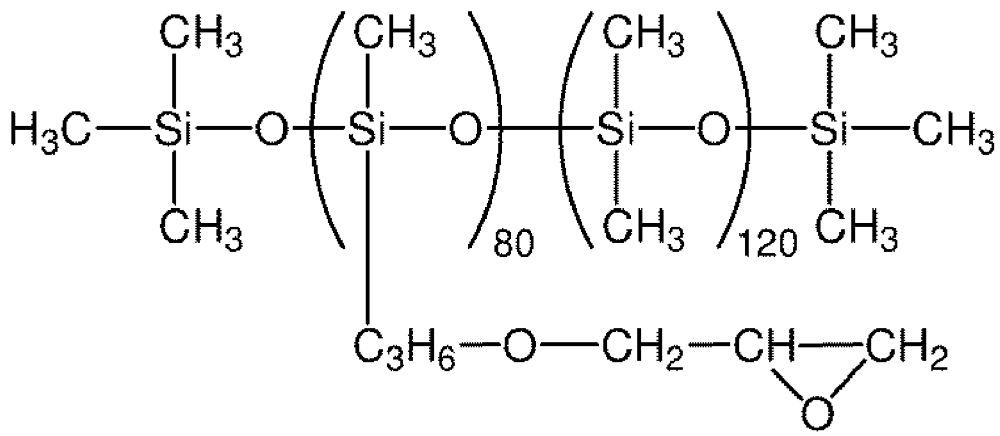

(2)

The physical properties of the obtained modified SBR were obtained through testing in the method described below as styrene content: 25% by mass, an amount of vinyl bonds: 30% by mol, weight average molecular weight (Mw): 50Mw, and modified-functional-group content: 0.5% by mol.

(Styrene content)

1H-NMR measurement was performed at 25°C by using a JEOL JNM-A 400NMR device. A ratio between phenyl protons of the styrene units at 6.5 to 7.2 ppm and vinyl protons of butadiene units at 4.9 to 5.4 ppm was determined based on the obtained spectrum. The styrene content was determined from the ratio.

(Amount of vinyl bonds)

An amount of vinyl bonds in the polymer was determined by infrared spectroscopy from absorption intensity in the vicinity of 910 $cm^{-1}$, which is absorption peak of a vinyl group.

(Molecular weight)

A weight average molecular weight (Mw) and a number average molecular weight (Mn) of the obtained modified SBR were obtained by polystyrene standard conversion based on a value measured by gel permeation chromatography (GPC) (GPC-8000 series manufactured by Tosoh Corporation, detector: differential refractometer, column: TSKGEL SUPERMULTIPORE HZ-M manufactured by Tosoh Corporation). Furthermore, the Mw and the Mn were measured before the modification. This is because Mw and Mn of copolymers containing modifying groups are not accurately measured due to interaction between the modifying groups and silica gel in the column.

Various chemicals used in examples and comparative examples will be collectively indicated below.

·SBR1: SLR6430 manufactured by Trinseo (S-SBR, styrene content: 40% by mass, an amount of vinyl bonds: 20% by mass, weight average molecular weight (Mw): 1000000, oil-extended product containing 37.5 parts by weight of oil per 100 parts by weight of rubber component (in Tables 1 and 2, an amount of rubber component in SBR1 is indicated as an amount of blended "SBR1", and a sum of an amount of oil in SBR1 and an amount of mineral oil described below is indicated as an amount of blended "oil"))
·SBR2: modified SBR produced in Production example 1 (S-SBR, styrene content: 25% by mass, an amount of vinyl bonds: 30% by mol, weight average molecular weight (Mw): 500000)
·BR: BR150L manufactured by Ube Industries, Ltd. (cis-1,4-content 98%)
·Silica: ULTRASIL (registered trademark) VN3 manufactured by Evonik Degussa (nitrogen adsorption specific surface area ($N_2SA$): 175 $m^2/g$)
·Silane coupling agent 1: Si69 (bis(3-triethoxysilylpropyl)tetrasulfide) manufactured by Evonik Degussa (sulfur content: 0.7% by mass)
·Silane coupling agent 2: NXT (3-octanoylthio-1-propyltriethoxysilane) manufactured by Momentive (sulfur content: 0.3% by mass)
·Carbon black: SHOBLACK N220 manufactured by Cabot Japan K.K. (nitrogen adsorption specific surface area ($N_2SA$): 125 $m^2/g$)
·Oil: mineral oil PW-380 manufactured by Idemitsu Kosan Co., Ltd.
.$\alpha$-methylstyrene-based resin 1: SYLVATRAXX (registered trademark) 4401 manufactured by Arizona Chemical Company (softening point: 85°C)
·$\alpha$-methylstyrene-based resin 2: resin obtained by polymerization of $\alpha$-methylstyrene and having a softening point of 100°C
·Hydrogenated-terpene-based resin 1: CLEARON M125 manufactured by YASUHARA CHEMICAL CO., LTD. (softening point: 125°C, hydrogenation rate: 90%)
·Hydrogenated-terpene-based resin 2: resin obtained by polymerization of terpene and having a softening point of 140°C and hydrogenation rate: 90%
·Anti-aging agent: NOCRAC 6C (N-(1,3-dimethylbutyl)-N'-phenyl-p-phenylenediamine) manufactured by Ouchi Shinko Chemical Industrial Co., Ltd.
·Stearic acid: stearic acid manufactured by NOF Corporation
·Zinc oxide: Zinc Oxide No. 1 manufactured by Mitsui Mining & Smelting Co., Ltd.
·Wax: Sunnoc N manufactured by Ouchi Shinko Chemical Industrial Co., Ltd.
·Sulfur: powdery sulfur manufactured by Tsurumi Chemical Industry Co., Ltd.
·Vulcanization accelerator 1: Nocceler CZ (N-cyclohexyl-2-benzothiazolyl sulfenamide) manufactured by Ouchi Shinko Chemical Industrial Co., Ltd.

·Vulcanization accelerator 2: Nocceler D (1,3-diphenylguanidine) manufactured by Ouchi Shinko Chemical Industrial Co., Ltd.

Examples 1 to 4 and 6 to 11, Reference Example 5 and Comparative examples 1 to 8

The blending components other than the sulfur and the vulcanization accelerator were filled according to the blending formula in Table 1 by using a 1.7L Banbury mixer manufactured by Kobe Steel, Ltd. such that the filling rate was 58%, and were kneaded for three minutes at the number of revolutions of 80 rpm until the temperature became 140°C. Subsequently, the sulfur and the vulcanization accelerator were added to the obtained kneaded product in the blending amount indicated in Table 1, and were thereafter kneaded by using an open roll at 80°C for five minutes, to obtain an unvulcanized rubber composition in the blending amount according to each of examples and comparative examples. Moreover, the obtained unvulcanized rubber composition was pressed and vulcanized at 170°C for 20 minutes, to obtain a vulcanized rubber composition.

The unvulcanized rubber composition and the vulcanized rubber composition obtained for each of examples and comparative examples were evaluated as follows. The results are indicated in Table 1.

<Mooney viscosity index>

A Mooney viscosity of the unvulcanized rubber composition was measured at 130°C in compliance with JIS K 6300, and is indicated as an index with the Mooney viscosity of comparative example 1 being 100, by using the following calculation equation. The greater the index is, the lower the viscosity is and the more easily processing can be performed.

$$\text{(Mooney viscosity index)} = \text{(Mooney viscosity of comparative example 1)}/\text{(Mooney viscosity in each blending)} \times 100$$

<Fuel economy index>

A strip-shaped test piece having the width of 4 mm, the length of 50 mm, and the thickness of 2 mm was punched from the sheet-shaped vulcanized rubber composition, and used for the test. A loss tangent (tan$\delta$) of the vulcanized rubber sheet was measured at the dynamic strain amplitude of 1%, the frequency of 10 Hz, and the temperature of 50°C by using a spectrometer manufactured by Ueshima Seisakusho Co., Ltd. and the reciprocal of tan$\delta$ is indicated as an index (fuel economy index) with the index of comparative example 1 being 100. The greater the value of the index is, the less the rolling resistance is and the more excellent the fuel economy is. The performance target value is not less than 85.

$$\text{(Fuel economy index)} = (\tan\delta \text{ of comparative example 1})/(\tan\delta \text{ in each blending}) \times 100$$

<Wet grip performance>

Wet grip performance was evaluated by using a flat belt type abrasion testing machine (Type FR5010) manufactured by Ueshima Seisakusho Co., Ltd. A cylindrical rubber test piece, of each vulcanized rubber composition, having the width of 20 mm and the diameter of 100 mm was used as a sample. A slip rate of the sample relative to a road surface was changed from 0 to 70% under the condition that the speed was 20 km/hour, a load was 4 kgf, and a temperature of the road surface was 20°C, and the greatest value of a coefficient of friction detected at that time was read. The measurement result is indicated as an index according to the following calculation equation. The greater the index is, the more excellent wet grip performance is. The performance target value is not less than 115.

$$\text{(Wet grip performance index)} = \text{(the greatest value of coefficient of friction in each blending)}/\text{(the greatest value of coefficient of friction of comparative example 1)} \times 100$$

<Wear resistance>

An amount of wear of each vulcanized rubber composition was measured by using a Lambourn abrasion testing

machine manufactured by Ueshima Seisakusho Co., Ltd. under the condition that the temperature was room temperature, an applied load was 1.0 kgf, and a slip rate was 30%. As the result of the test, a reciprocal of an amount of wear is indicated as an index with the index of comparative example 1 being 100. The greater the value is, the higher the wear resistance is. The performance target value is not less than 85.

[Table 1]

| | | Examples | | | | Ref Ex. | Examples | | | | | | Comparative Examples | | | | | | | |
|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 1 | 2 | 3 | 4 | 5 | 6 | 7 | 8 |
| Blending amount (part(s) by mass) | SBR1 | 80 | 80 | 80 | 80 | 80 | 80 | - | 50 | - | 80 | 80 | 80 | 80 | 80 | 80 | 80 | 50 | 50 | 50 |
| | SBR2 | - | - | - | - | - | - | 80 | - | 50 | - | - | - | - | - | - | - | - | - | - |
| | BR | 20 | 20 | 20 | 20 | 20 | 20 | 20 | 50 | 50 | 20 | 20 | 20 | 20 | 20 | 20 | 20 | 50 | 50 | 50 |
| | Silica | 75 | 75 | 75 | 75 | 75 | 75 | 75 | 75 | 75 | 75 | 75 | 75 | 75 | 75 | 75 | 75 | 75 | 75 | 75 |
| | Silane coupling agent 1 | 3 | 3 | 3 | 3 | 6 | - | 3 | 3 | 3 | 3 | 3 | 6 | 3 | 3 | 3 | 3 | 3 | 3 | 3 |
| | Silane coupling agent 2 | 3 | 3 | 3 | 3 | - | 6 | 3 | 3 | 3 | 3 | 3 | - | 3 | 3 | 3 | 3 | 3 | 3 | 3 |
| | Carbon black | 5 | 5 | 5 | 5 | 5 | 5 | 5 | 5 | 5 | 5 | 5 | 5 | 5 | 5 | 5 | 5 | 5 | 5 | 5 |
| | Oil | 40 | 40 | 40 | 40 | 40 | 40 | 40 | 40 | 40 | 40 | 40 | 40 | 40 | 40 | 40 | 40 | 40 | 40 | 40 |
| | α-methylstyrene-based resin 1 | 10 | 5 | 20 | 10 | 10 | 10 | 10 | 10 | 10 | - | 10 | - | - | 10 | - | 1 | 30 | 10 | 10 |
| | α-methylstyrene-based resin 2 | - | - | - | - | - | - | - | - | - | 10 | - | - | - | - | - | - | - | - | - |
| | Hydrogenated-terpene-based resin 1 | 5 | 5 | 5 | 15 | 5 | 5 | 5 | 5 | 5 | 5 | - | - | - | - | 5 | 5 | 5 | 0.7 | 20 |
| | Hydrogenated-terpene-based resin 2 | - | - | - | - | - | - | - | - | - | - | 5 | - | - | - | - | - | - | - | - |
| | Anti-aging agent | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| | Stearic acid | 2 | 2 | 2 | 2 | 2 | 2 | 2 | 2 | 2 | 2 | 2 | 2 | 2 | 2 | 2 | 2 | 2 | 2 | 2 |
| | Zinc oxide | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 | 2.5 |
| | Wax | 1 | 1 | 1 | 1 | 1 | 1 | 1 | 1 | 1 | 1 | 1 | 1 | 1 | 1 | 1 | 1 | 1 | 1 | 1 |
| | Sulfur | 2 | 2 | 2 | 2 | 2 | 2 | 2 | 2 | 2 | 2 | 2 | 2 | 2 | 2 | 2 | 2 | 2 | 2 | 2 |
| | Vulcanization accelerator 1 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 | 1.8 |
| | Vulcanization accelerator 2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 | 1.2 |
| Evaluation | Mooney viscosity index | 121 | 118 | 129 | 126 | 113 | 117 | 115 | 129 | 123 | 122 | 120 | 100 | 103 | 110 | 106 | 107 | 141 | 110 | 126 |
| | Fuel economy index | 94 | 97 | 88 | 90 | 92 | 93 | 108 | 118 | 121 | 97 | 95 | 100 | 103 | 93 | 95 | 94 | 61 | 93 | 58 |
| | Wet grip performance index | 128 | 121 | 133 | 128 | 121 | 118 | 133 | 119 | 122 | 121 | 131 | 100 | 100 | 110 | 112 | 112 | 122 | 109 | 127 |
| | Wear resistance index | 94 | 97 | 90 | 93 | 86 | 87 | 90 | 118 | 107 | 97 | 94 | 100 | 100 | 90 | 96 | 94 | 77 | 90 | 88 |

According to the result indicated in Table 1, in examples 1 to 4 and 6 to 11 and in reference example 5 in which the rubber component, containing SBR and BR as diene rubber, contained 3 to 25 parts by mass of the α-methylstyrene-based resin having a predetermined softening point, and 1 to 15 parts by mass of the hydrogenated-terpene-based resin having a predetermined softening point and a predetermined hydrogenation rate, while excellent fuel economy and excellent wear resistance were maintained, wet grip performance was significantly improved as compared to comparative examples 1 and 2 in which α-methylstyrene-based resin and hydrogenated-terpene-based resin were not used, and comparative examples 3 and 4 in which only one of α-methylstyrene-based resin or hydrogenated-terpene-based resin was used, and, furthermore, wet grip performance was significantly improved also as compared to comparative examples 5 and 7 in which a content of either the α-methylstyrene-based resin or the hydrogenated-terpene-based resin was less than a value in a predetermined range. Thus, it is indicated that, in examples 1 to 4 and 6 to 11 and in reference example 5, fuel economy, wet grip performance, and wear resistance were comprehensively improved, and an excellent rubber composition for allowing the performances to be obtained in a well-balanced manner, was obtained. Meanwhile, it is indicated that, in comparative examples 6 and 8 in which a content of either the α-methylstyrene-based resin or the hydrogenated-terpene-based resin was greater than a value in the predetermined range, although wet grip performance was significantly improved similarly to examples, fuel economy and wear resistance were much worse than those in examples.

## Claims

1. A rubber composition for a tire, the rubber composition comprising:

   3 to 25 parts by mass of an α-methylstyrene-based resin per 100 parts by mass of a rubber component containing diene rubber, said α-methylstyrene-based resin having a softening point of 60°C to 110°C;
   1 to 15 parts by mass of a hydrogenated-terpene-based resin per 100 parts by mass of the rubber component containing the diene rubber, said hydrogenated-terpene-based resin having a softening point of 120°C to 150°C and a hydrogenation rate of 10% to 100%;
   silica; and
   3-octanoylthio-1-propyltriethoxysilane as silane coupling agent.

2. The rubber composition for a tire according to claim 1, comprising two kinds of silane coupling agents having different sulfur contents.

3. The rubber composition for a tire according to claim 2, wherein a sulfur content of the silane coupling agent having a higher sulfur content is 0.35% to 0.8% by mass, and a sulfur content of the silane coupling agent having a lower sulfur content is 0.05% to 0.35% by mass such that both the sulfur contents are prevented from being 0.35% by mass.

4. The rubber composition for a tire according to any one of claims 1 to 3, comprising 40% to 95% by mass of styrene-butadiene rubber and 5% to 60% by mass of butadiene rubber in the rubber component.

5. The rubber composition for a tire according to any one of claims 1 to 4, comprising a combination of bis(3-triethoxysilylpropyl)tetrasulfide and 3-octanoylthio-1-propyltriethoxysilane as silane coupling agent.

## Patentansprüche

1. Kautschukzusammensetzung für einen Reifen, wobei die Kautschukzusammensetzung umfasst:

   3 bis 25 Masseteile eines Harzes auf α-Methylstyrolbasis pro 100 Masseteile einer Kautschukkomponente, die Dienkautschuk enthält, wobei das Harz auf α-Methylstyrolbasis einen Erweichungspunkt von 60°C bis 110°C aufweist;
   1 bis 15 Masseteile eines Harzes auf Basis von hydriertem Terpen pro 100 Masseteile der Kautschukkomponente, die den Dienkautschuk enthält, wobei das Harz auf Basis von hydriertem Terpen einen Erweichungspunkt von 120°C bis 150°C und eine Hydrierungsrate von 10% bis 100% aufweist;
   Siliciumoxid; und
   3-Octanoylthio-1-propyltriethoxysilan als Silankupplungsmittel.

2. Kautschukzusammensetzung für einen Reifen nach Anspruch 1, die zwei Arten von Silankupplungsmitteln mit

unterschiedlichen Schwefelgehalten umfasst.

3. Kautschukzusammensetzung für einen Reifen nach Anspruch 2, wobei der Schwefelgehalt des Silankupplungsmittels mit einem höheren Schwefelgehalt 0,35 bis 0,8 Masse-% beträgt und der Schwefelgehalt des Silankupplungsmittels mit einem niedrigeren Schwefelgehalt 0,05 bis 0,35 Masse-% beträgt, dergestalt, dass nicht beide Schwefelgehalte 0,35 Masse-% betragen.

4. Kautschukzusammensetzung für einen Reifen nach einem der Ansprüche 1 bis 3, umfassend 40 bis 95 Masse-% Styrol-Butadien-Kautschuk und 5 bis 60 Masse-% Butadien-Kautschuk in der Kautschukkomponente.

5. Kautschukzusammensetzung für einen Reifen nach einem der Ansprüche 1 bis 4, umfassend eine Kombination aus bis(3-Triethoxysilylpropyl)tetrasulfid und 3-Octanoylthio-1-propyltriethoxysilan als Silankupplungsmittel.

## Revendications

1. Composition de caoutchouc pour un pneu, la composition de caoutchouc comprenant :

   3 à 25 parties en masse d'une résine à base de $\alpha$-méthylstyrène par 100 parties en masse d'un composant de caoutchouc contenant un caoutchouc de diène, ladite résine à base de $\alpha$-méthylstyrène possédant un point de ramollissement de 60 °C à 110 °C ;
   1 à 15 parties en masse d'une résine à base de terpène hydrogéné par 100 parties en masse du composant de caoutchouc contenant le caoutchouc de diène, ladite résine à base de terpène hydrogéné possédant un point de ramollissement de 120 °C à 150 °C et un taux d'hydrogénation de 10 % à 100 % ;
   une silice ; et
   du 3-octanoylthio-1-propyltriéthoxysilane en tant qu'agent de couplage de silane.

2. Composition de caoutchouc pour un pneu selon la revendication 1, comprenant deux sortes d'agents de couplage de silane possédant des teneurs en soufre différentes.

3. Composition de caoutchouc pour un pneu selon la revendication 2, une teneur en soufre de l'agent de couplage de silane possédant une teneur en soufre supérieure qui est de 0,35 % à 0,8 % en masse, et une teneur en soufre de l'agent de couplage de silane possédant une teneur en soufre inférieure qui est de 0,05 % à 0,35 % en masse de sorte que les deux teneurs en soufre sont empêchées d'être de 0,35 % en masse.

4. Composition de caoutchouc pour un pneu selon l'une quelconque des revendications 1 à 3, comprenant 40 % à 95 % en masse de caoutchouc de styrène-butadiène et 5 % à 60 % en masse de caoutchouc de butadiène dans le composant de caoutchouc.

5. Composition de caoutchouc pour un pneu selon l'une quelconque des revendications 1 à 4, comprenant une combinaison de bis(3-triéthoxysilylpropyl)tétrasulfure et de 3-octanoylthio-1-propyltriéthoxysilane en tant qu'agent de couplage de silane.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012082325 A
- EP 3228658 A1
- EP 2960289 A1
- EP 2695911 A1